Europäisches Patentamt

(19) European Patent Office

Office européen des brevets

(11) Numéro de publication: **0 160 595**
**B1**

(12) **FASCICULE DE BREVET EUROPÉEN**

(45) Date de publication du fascicule du brevet:
**21.09.88**

(21) Numéro de dépôt: **85400590.7**

(22) Date de dépôt: **26.03.85**

(51) Int. Cl.⁴: **H 04 N 7/167**

(54) Circuits de codage et de décodage d'un signal vidéo codé par un décalage du signal d'image par rapport au signal de synchronisation.

(30) Priorité: **30.03.84 FR 8405043**

(43) Date de publication de la demande:
**06.11.85 Bulletin 85/45**

(45) Mention de la délivrance du brevet:
**21.09.88 Bulletin 88/38**

(84) Etats contractants désignés:
**BE CH DE GB IT LI NL**

(56) Documents cité:
**FR-A-2 321 222**
**FR-A-2 330 236**
**FR-A-2 524 241**

(73) Titulaire: **SOCIETE ELECTRONIQUE DE LA REGION PAYS DE LOIRE, 74, rue du Surmelin, F-75020 Paris (FR)**

(72) Inventeur: **Guillon, Jean- Claude, THOMSON- CSF SCPI 173, bld Haussmann, F-75379 Paris Cedex 08 (FR)**
Inventeur: **Maheo, Jean- Yves, THOMSON- CSF SCPI 173, bld Haussmann, F-75379 Paris Cedex 08 (FR)**

(74) Mandataire: **Grynwald, Albert, THOMSON- CSF SCPI 19, avenue de Messine, F-75008 Paris (FR)**

## Description

L'invention est relative à des circuits de codage et de decodage d'un signal vidéo codé par un décalage (avance ou retard) du signal d'image par rapport au signal de synchronisation ligne.

Dans les systèmes de télévision dits "à péage", c'est-à-dire les systèmes où on désire transmettre des émissions télévisées seulement à des personnes autorisées-ayant par exemple payé un abonnement -, à l'émission le signal est codé de manière que le signal ne puisse être reçu correctement que par ces personnes autorisées. Dans un tel système le récepteur comporte donc un circuit décodeur pour effectuer, sur le signal reçu, une transformation inverse de la transformation effectuée à l'émission.

Dans le brevet français n° 2 330 236 est décrit un procédé de codage et de décodage d'émissions de télévision qui consiste, pour chaque ligne, à l'émission, à décaler le signal d'image par rapport au signal de synchronisation et, à la réception, à conférer un décalage complémentaire rétablissant l'intervalle de temps correct entre le signal de synchronisation et le signal d'image. Ce retard varie d'une ligne à une autre ou d'un groupe de lignes à un autre groupe de lignes afin que l'image reçue par un récepteur sans décodeur soit déformée et ainsi pénible à regarder.

Dans ce brevet antérieur le circuit de décodage comporte une ligne à retard du type à transfert de charge (DTC ou CCD) et un commutateur commandé et monté de façon telle que seul le signal d'image traverse la ligne à retard, le signal de synchronisation ligne étant transmis directement. Le circuit de codage de ce brevet antérieur - à retard de l'ordre de 5 microsecondes - ne permet que le décodage de signaux qui, à l'émission, sont codés avec un intervalle séparant le signal de synchronisation du signal d'image qui est plus petit que l'intervalle correspondant du signal non codé. Autrement dit le décodage consistant à conférer un retard il ne peut être utilisé que pour désembrouiller un signal codé par une avance. De plus le montage de la ligne à retard DTC du document antérieur est complexe et la ligne à retard utilisée n'est pas d'un usage courant et est donc d'un prix élevé.

L'invention ne présente pas ces inconvénients.

Elle est caractérisée en ce que le circuit de décodage comprend une ligne à retard de capacité voisine d'une ligne de signal vidéo de durée P, la fréquence du signal d'horloge de commande de cette ligne étant telle qu'une ligne vidéo est retardée d'une valeur $P_1$ - B, de même ordre de grandeur que la durée P d'une ligne vidéo, et le circuit de décodage comprend un moyen pour bloquer le signal d'horloge, ou diminuer la fréquence d'horloge, pendant un temps qui, à chaque ligne, est fonction du décalage à effectuer.

On rappelle ici qu'une ligne à retard DTC est un registre à décalage dont chaque case contient un signal analogique qui est un échantillon du signal d'entrée. Le contenu d'une case passe dans la suivante à chaque signal d'horloge. La fréquence d'horloge est la fréquence d'échantillonnage du signal vidéo. Elle doit donc être supérieure au double de la fréquence maximale du signal vidéo c'est-à-dire doit être supérieure à douze MHz. Le retard est égal au nombre d'étages, ou cases, multiplié par la durée de la période d'horloge.

Pendant le blocage du générateur d'horloge, ou même entre deux impulsions d'horloge, les signaux gardent leurs valeurs dans les divers étages de la ligne à retard.

Pour expliquer le fonctionnement du circuit de décodage de l'invention on supposera que $P_1$ = P. Dans ce cas si le signal vidéo d'image est codé avec un retard B (par exemple de 1 μs) le signal en sortie de la ligne à retard DTC aura le retard suivant:

$$B + (P - B) = P$$

P étant la durée d'une ligne, on assure ainsi le décodage car, dans ce cas, le signal à la sortie de la ligne à retard est en phase avec la vidéo nominale à une période P d'une ligne près.

Dans cette situation il n'est nécessaire ni d'interrompre le fonctionnement de l'horloge ni de diminuer la fréquence de cette dernière.

Par contre si le signal vidéo émis est en phase avec le signal nominal, si l'horloge n'était pas bloquée pendant un certain temps, à la sortie de la ligne à retard on obtiendrait un signal avec un retard P - B c'est-à-dire, à une période de ligne près, avec une avance de B par rapport au signal nominal. C'est pourquoi on bloque l'horloge pendant un temps B pour rétablir, à la réception, la phase correcte du signal.

Enfin si, à l'émission, le signal est codé en avance d'une valeur B, c'est-à-dire avec un retard de - B, si l'horloge n'était pas bloquée à la sortie de la ligne à retard on obtiendrait un retard total de P - 2B, c'est-à-dire une avance de 2B. On bloque donc l'horloge de commande de la ligne à retard DTC pendant un temps 2B.

Le dispositif de décodage selon l'invention peut être utilisé avec tous les systèmes de télévision en couleurs. Il est cependant plus particulièrement avantageux pour le système PAL ou NTSC où l'on effectue une modulation en amplitude et en phase car le signal vidéo ne subit de distorsions différentielles (de ligne à ligne) ni en amplitude ni en phase, notamment en raison de l'unicité de la ligne à retard. De plus la ligne à retard est d'un type très courant; elle est donc d'un bas prix.

Si la période du signal d'horloge et/ou le nombre de cases du registre à décalage DTC sont tels qu'il n'est possible d'effectuer la correction qu'à une valeur Δ t (par exemple 1 microseconde) près par excès on prévoit alors une autre ligne à retard, ou un monostable apportant un retard Δ t du seul signal de synchronisation.

D'autres caractéristiques et avantages de l'invention apparaîtront avec la description de certains de ses modes de réalisation,, celle-ci étant effectuée en se référant aux dessins ci-annexés sur lesquels:

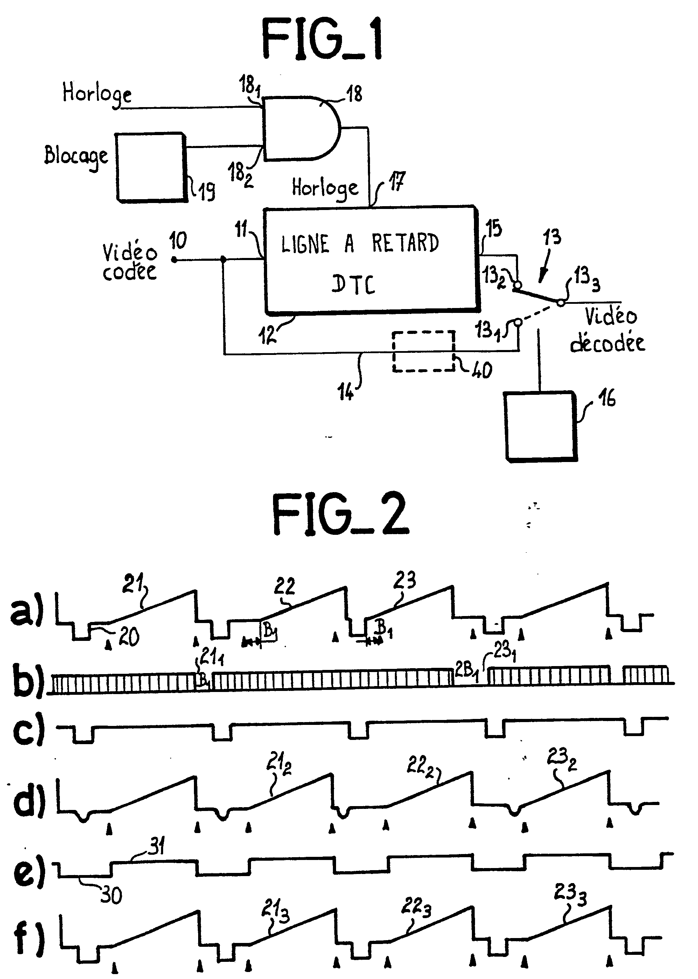

- la figure 1 est un schéma d'un circuit de décodage selon l'invention, et

- les figures $2_{a)}$ à $2_{f)}$ sont des diagrammes de signaux apparaissant en divers points du schéma de la figure 1 et permettant de comprendre son fonctionnement.

Le signal vidéo codé est appliqué sur l'entrée 10 du circuit de décodage, laquelle est connectée, d'une part, à l'entrée 11 d'une ligne à retard du type à transfert de charge DTC 12 et, d'autre part, au premier contact $13_1$ d'un commutateur 13 par l'intermédiaire d'un conducteur 14. Le second contact $13_2$ du commutateur 13 est relié à la sortie 15 de la ligne à retard DTC 12. Sur le point milieu $13_3$ du commutateur 13 on recueille le signal vidéo décodé; ce contact $13_3$ constitue donc la sortie du circuit de décodage.

Le commutateur 13 est commandé par un circuit 16 fournissant des impulsions du type de celles représentées sur la figure $2_{e)}$. Ce circuit 16 est lui-même commandé par le signal de synchronisation ligne et pendant le retour trame. Une liaison est établie entre les points $13_1$ et $13_3$ lors de l'impulsion de synchronisation ligne 20 (figure $2_{a)}$) de manière que cette impulsion de synchronisation ligne soit transmise sans retard. Par contre lorsqu'apparaît le signal d'image la liaison est établie entre les contacts $13_2$ et $13_3$. Dans ce cas le signal sur la sortie est le signal qui a traversé la ligne à retard 12.

L'entrée d'horloge 17 de la ligne 12 est connectée à la sortie d'une porte ET 18 à deux entrées $18_1$ et $18_2$ dont la première, $18_1$, reçoit le signal d'horloge et la seconde, $18_2$, est connectée à la sortie d'un circuit 19 générateur d'impulsions de blocage permettant, comme on le verra ci-après, de faire varier le retard apporté par la ligne 12. Le circuit 19 est commandé en synchronisme avec le circuit de codage de l'émetteur. Ce sont les signaux qu'il émet qui permettent de compenser les avances ou retards du signal d'image par rapport au signal de synchronisation ligne qui ont été apportés par le codage.

On comprend aisément le fonctionnement du circuit de décodage selon l'invention si, tout d'abord, on rappelle qu'une ligne à retard DTC est analogue à un registre à décalage comprenant N étages. L'étage d'entrée emmagasine le signal appliqué sur son entrée au moment de l'application d'un signal d'horloge sur l'entrée 17. A ce moment les signaux emmagasinés dans chaque étage sont transférés dans l'étage suivant. Le signal sur la sortie 15 est celui du dernier étage. Le retard $\zeta$ apporté par la ligne 12 est donc:

$$\zeta = N.T + B.$$

Dans cette formule T est la période du signal d'horloge, N, comme déjà indiqué, est le nombre d'étages et B est la durée de blocage de l'horloge.

Dans l'exemple la fréquence d'horloge est choisie de façon telle que, lorsque cette ligne a emmagasiné le signal vidéo d'une ligne de balayage (de durée 64 $\mu$ s), le retard apporté par cette ligne 12 est inférieur d'une durée déterminée $B_1$ à la durée P de la ligne vidéo, et cela sans blocage du signal d'horloge. Ainsi:

$$N.T = P - B_1.$$

Sur le diagramme de la figure $2_{a)}$ le signal d'image 21, qui correspond à une ligne, n'a pas subi de décalage par rapport à l'impulsion 20 de synchronisation ligne.

Pour que cette ligne vidéo soit reçue correctement sur le téléviseur il faut bloquer le signal d'horloge pendant une durée $B_1$ car, s'il n'en était pas ainsi, le signal 21 serait, à une ligne près, en avance de $B_1$.

Ce blocage de l'horloge pendant la durée $B_1$ a été représenté par l'intervalle $21_1$ sur la figure $2_{b)}$. Ce retard n'aura d'effet que sur la ligne suivante comme le montre les diagrammes des figures $2_{d)}$ et $2_{f)}$ où la figure $2_{d)}$ représente le signal sur la sortie 15 de la ligne à retard 12 et la figure $2_{f)}$ le signal sur la sortie $13_3$ du circuit de la figure 1. La figure $2_{c)}$ représente le signal de synchronisation ligne d'émission et la figure $2_{e)}$ représente le signal sur la sortie du circuit 16, c'est-à-dire l'état du commutateur 13.

Le niveau bas, 30, du diagramme de la figure $2_{e)}$ correspond à la liaison entre les contacts $13_1$ et $13_3$, c'est-à-dire à la connexion directe de l'entrée 10 du circuit de décodage à la sortie $13_3$ de ce circuit, tandis que le niveau haut 31 correspond à la connexion entre les contacts $13_2$ et $13_3$, c'est-à-dire au passage du signal d'image à travers la ligne à retard 12.

A chaque ligne vidéo le niveau 30 est appliqué pendant un temps déterminé, 6 $\mu$ s environ pour la norme française, le signal 31 pendant le reste du temps, c'est-à-dire 58 $\mu$ s environ.

Etant donné que la ligne à retard 12 reçoit en permanence des signaux sur son entrée 11, même le signal de synchronisation sera retardé dans cette ligne l2; ce signal de synchronisation est également déformé. Mais ce retard et cette déformation du signal de synchronisation sont sans effet, en raison du commutateur 13 et de sa commande: le signal de synchronisation transmis par la ligne 12 n'est pas pris en compte car au moment où il apparaît sur la sortie 15 le contact $13_2$ est "en l'air", c'est-à-dire non connecté à la sortie $13_3$.

Le signal $21_2$ (figure $2_d$) sur la sortie 15 et le signal $21_3$ (figure $2_{f)}$) sur la sortie $13_3$ sont ainsi en phase avec le signal de synchronisation d'émission.

Le signal d'image 22 (figure $2_{a)}$) est en retard d'une durée $B_1$ par rapport au signal non codé. Il est restitué avec sa phase correcte par la ligne 12 sans blocage de l'horloge de cette dernière car le signal $22_2$ apparaissant sur la sortie 15 de la ligne 12 a un retard de:

$B_1 + (P - B_1) = P$, ce qui correspond exactement au retard d'une ligne.

Le signal d'image 23, qui s'étend également sur une ligne, est en avance de $B_1$ par rapport au signal non codé. Pour le décodage le signal d'horloge est bloqué pendant $2B_1$ (figure 2$_b$), intervalle 23$_1$).

Le codage est effectué à l'émission à l'aide d'un générateur pseudo-aléatoire délivrant des signaux binaires qui, pour chaque ligne, représentent soit un signal d'image en phase avec le signal correct, soit en retard de $B_1$ soit en avance de $B_1$. Ce générateur pseudo-aléatoire ayant par exemple une sortie à deux bits, le signal 01 correspond à une absence de décalage, 10 à un retard $B_1$, 11 à une avance $B_1$, et 00 aussi à une absence de décalage.

A la réception le circuit 19 comporte également un générateur pseudo-aléatoire fonctionnant en synchronisme avec celui de l'émission pour compenser les avances et retards. Le signal de départ du générateur pseudo-aléatoire du circuit 19 est bien entendu fourni par l'émetteur.

Dans un exemple la séquence de variation des avances et retards a une période de six trames.

Lorsqu'une émission non codée est reçue le commutateur 13 est constamment dans la position de connexion des contacts 13$_1$ et 13$_3$. Dans le cas d'une émission non codée on peut également conserver la commande par le circuit 16, ce qui donne alors une possibilité de réglage, par la durée de blocage $B_1$, du décalage du signal d'image par rapport au signal de synchronisation ligne.

En variante, au lieu de bloquer le signal d'horloge pendant un temps déterminé, on modifie la fréquence de ce signal d'horloge, au moins pendant une fraction de la durée de chaque ligne. Cette variante est nécessaire lorsqu'on dispose d'une ligne à retard DTC dont le fonctionnement est perturbé en cas de blocage ou lorsqu'on utilise plusieurs lignes à retard montées en série. Dans un exemple on applique sur l'entrée d'horloge 17, pendant une fraction de chaque ligne, des signaux d'horloge à la fréquence moitié de la fréquence nominale d'horloge.

Le calcul de la durée pendant laquelle ces signaux d'horloge à fréquence moitié doivent être appliqués est le suivant:

On rappelle tout d'abord que le retard total $\zeta$ apporté par la ligne à retard 12 est: $\zeta = N.T + B$, N étant le nombre d'étages de la ligne et T la période du signal d'horloge (non ralenti) et B le temps de blocage de l'horloge.

Le temps de blocage B est équivalent à un nombre n de périodes d'horloge T : $B = n.T$.

Ainsi: $\zeta = NT + nT$

Par ailleurs, si au lieu de bloquer l'horloge pendant le temps B on lui applique m périodes d'horloge 2T (fréquence moitié), alors:

$\zeta = (N - m)T + m \cdot 2T$, soit, pour obtenir le même retard:

$\zeta = NT + nT = (N - m)T + m \cdot 2T$.

D'où on déduit: $n = m$.

On applique ainsi à la ligne à retard un nombre m de périodes d'horloge de fréquence moitié qui est égal au nombre n de périodes d'horloge équivalent au temps de blocage.

Quel que soit le mode de réalisation, la fréquence du signal d'horloge nominal est supérieure à 12 MHz pour que le signal échantillonné par le registre à décalage DTC 12 ne soit pas perturbé.

Le décalage $B_1$ est, de préférence, de l'ordre d'une microseconde.

Il n'est pas indispensable que le retard apporté par la ligne 12, sans blocage de l'horloge, soit inférieur à la durée P d'une ligne vidéo. Ce retard pourrait être égal ou même supérieur à la durée P. Dans ce cas il est nécessaire de prévoir une ligne à retard ou un monostable 40, représenté en traits interrompus sur la figure 1, entre l'entrée 10 et le contact 13$_1$ pour retarder le signal de synchronisation d'une durée qui permet de rétablir l'intervalle correct entre la synchronisation et le signal d'image. Par exemple si la ligne 12 apporte un retard de 65 $\mu$s, l'élément 40 apportera un retard de 1 $\mu$s.

L'invention n'est bien entendu pas limitée au cas où le signal vidéo d'image est à chaque ligne soit en phase avec le signal nominal, soit en avance, soit en retard. Elle s'applique également dans le cas où le signal d'image est soit en phase avec le signal nominal, soit en retard d'une valeur R, soit en retard d'une valeur 2 R.

**Revendications**

1. Circuit de décodage d'un signal de télévision qui, à l'émission, a été codé pour chaque ligne par décalage pseudo-aléatoire du signal vidéo (21) par rapport au signal de synchronisation ligne (20), ce circuit de décodage comprenant une ligne à retard (12), du type à transfert de charge (DTC), dont le retard est commandé pour rétablir le décalage correct entre le signal de synchronisation et le signal d'image, et un commutateur (13) commandé pour que le signal de synchronisation ligne (20) traverse une voie de dérivation (14), caractérisé en ce que la ligne à retard a une capacité voisine d'une ligne de signal vidéo de durée P, la fréquence du signal d'horloge de commande de cette ligne (DTC) est telle qu'une ligne vidéo est retardée d'une valeur $P_1$ - B, du même ordre de grandeur que la durée P d'une ligne vidéo, et le circuit de décodage comprend un moyen (18, 19) pour bloquer le signal d'horloge, ou diminuer la fréquence de ce signal d'horloge, pendant un temps qui, à chaque ligne, est fonction du décalage à effectuer.

2. Circuit selon la revendication 1, caractérisé en ce que $P_1$ est égal à la durée P d'une ligne vidéo.

3. Circuit selon la revendication 2, caractérisé en ce que B est de l'ordre de la microseconde.

4. Circuit selon l'une quelconque des revendications 1 à 3, caractérisé en ce que l'entrée d'horloge (17) de la ligne a retard (DTC 12) est connectée à la sortie d'une porte ET (18) à deux entrées ($18_1$, $18_2$) dont la première reçoit directement le signal d'horloge et dont la seconde ($18_2$) reçoit les signaux fournis par un circuit de blocage (19) dont les signaux de sortie commandent le décodage.

5. Circuit selon l'une quelconque des revendications 1 à 3, caractérisé en ce qu'on applique sur l'entrée d'horloge (17) de la ligne à retard DTC (12) un signal d'horloge de fréquence égale à la moitié de celle du signal d'horloge nominal pendant une fraction de la durée de chaque ligne vidéo pour assurer le décodage.

6. Circuit selon la revendication 1, caractérisé en ce que la durée $P_1$ - B étant supérieure à la durée P d'une ligne de signal vidéo, pour rétablir la phase correcte du signal de synchronisation ligne par rapport au signal d'image, on prévoit un élément de retard (40) pour le signal de synchronisation ligne.

7. Circuit de codage utilisable avec un circuit de décodage selon l'une quelconque des revendications précédentes, caractérisé en ce que le signal vidéo d'image est, à chaque ligne, soit en phase avec le signal nominal, soit en avance, soit en retard.


**Patentansprüche**

1. Schaltung zum Dekodieren eines Fernsehsignals, das sendeseitig für jede Zeile durch pseudo-zufällige Verschiebung des Videosignals (21) in Bezug auf das Zeilensynchronisationssignal (20) kodiert worden ist, wobei diese Schaltung zum Dekodieren eine Verzögerungsleitung (12) vom Typ mit Ladungsüberführung (DTC) umfaßt, deren Verzögerung derart gesteuert ist, daß die korrekte Verschiebung zwischen dem Synchronisationssignal und dem Bildsignal wiederhergestellt wird, und einen Umschalter (13), der so gesteuert ist, daß das Leitungssynchronisationssignal (20) eine Verzweigung (14) durchläuft, dadurch gekennzeichnet, daß die Verzögerungsleitung eine Kapazität besitzt, die einer Videosignalzeile der Dauer P nahe kommt, daß die Frequenz des Taktsignals zur Steuerung dieser Leitung (DTC) derart ist, daß eine Videozeile um eine Dauer $P_1$ -B verzögert wird, die in derselben Größenordnung wie die Dauer P einer Videozeile liegt, und daß die Schaltung zum Dekodieren eine Einrichtung (18, 19) umfaßt, um das Taktsignal zu sperren oder um die Frequenz dieses Taktsignals zu vermindern, während einer Zeit, die in jeder Zeile von der auszuführenden Verschiebung abhängig ist.

2. Schaltung nach Anspruch I, dadurch gekennzeichnet, daß $P_1$ gleich der Dauer P einer Videozeile ist.

3. Schaltung nach Anspruch 2, dadurch gekennzeichnet, daß B in der Größenordnung einer Mikrosekunde liegt.

4. Schaltung nach einem der Ansprüche 1 bis 3, dadurch gekennzeichnet, daß der Takteingang (17) der Verzögerungsleitung (DTC 12) mit dem Ausgang einer AND-Schaltung (18) und mit zwei Eingängen ($18_1$, $18_2$) verbunden ist, wovon der eine das Taktsignal unmittelbar empfängt und der andere ($18_2$) die durch eine Sperrschaltung (19) abgegebenen Signale empfängt, deren Ausgangssignale die Dekodierung steuern.

5. Schaltung nach einem der Ansprüche 1 bis 3, dadurch gekennzeichnet, daß zur Gewährleistung der Dekodierung während eines Bruchteils der Dauer jeder Videozeile an den Takteingang (17) der Verzögerungsleitung DTC (12) ein Taktsignal angelegt wird, dessen Frequenz der Hälfte derjenigen des Nenntaktsignals entspricht.

6. Schaltung nach Anspruch 1, dadurch gekennzeichnet, daß für eine Dauer $P_1$ -B, die größer als die Dauer P einer Videosignalzeile ist, ein Verzögerungselement (40) für das Leitungssynchronisationssignal vorgesehen wird, um die korrekte Phase des Leitungssynchronisationssignals in Bezug auf das Bildsignal wiederherzustellen.

7. Schaltung zum Kodieren, die mit einer Schaltung zum Dekodieren nach einem der vorstehenden Ansprüche verwendet werden kann, dadurch gekennzeichnet. daß das Bildvideosignal in jeder Zeile entweder mit dem Nennsignal gleichphasig ist, ihm vorauseilt oder ihm nacheilt.


**Claims**

1. A circuit for decoding a television signal which, at the time of transmission, has been encoded for each line by pseudo-random shift of the video signal (21) in relation to the line sync signal (20), said decoding circuit comprising a delay line (12) of the charge transfer type (DTC), whose delay is controlled in order to reestablish the correct shift between the sync signal and the image signal, and a switch (13) controlled in such a way that the line sync signal (20) passes along a branch path (14), characterized in that the delay line has a capacity near that of one line of the video signal of the duration P, the frequency of the clock signal for the control of this line (DTC) is such that a video line is delayed by a value of $P_1$ - B, of the same order of magnitude as the duration P of a video line, and the decoding circuit comprises a means (18 and 19) to lock the clock signal, or to diminish the frequency of such clock signal, during a time which, for each line, is a function of the shift to be effected.

2. The circuit as claimed in claim 1, characterized in that $P_1$ is equal to the duration P of a video line.

3. The circuit as claimed in claim 2, characterized in that the B is of the order of microseconds.

4. The circuit as claimed in any one of the claims 1 through 3, characterized in that the input terminal of the clock (17) for the delay line (DTC 12) is connected with the output terminal of an AND gate (18) with two inputs ($18_1$ and $18_2$), of which the first one directly receives the clock signal and of which the second one ($18_2$) receives the signals furnished by a locking circuit (19), whose output signals control decoding.

5. The circuit as claimed in any one of the claims 1 through 3, characterized in that the clock input terminal (17) of the delay line DTC (12) receives a clock signal with a frequency equal to half that of the nominal clock signal during a fraction of the duration of each video line in order to ensure decoding.

6. The circuit as claimed in claim 1, characterized in that, the duration $P_1$ - B being greater than the duration P of a video signal line, in order to reestablish the correct phase of the sync signal in relation to the image signal, a delay element (40) is provided for the line sync signal.

7. An encoding circuit able to be used with a decoding circuit as claimed in any one of the preceding claims, characterized in that at each line the image video signal is either in phase with the nominal signal, or in advance or in retard.

# FIG_1

Horloge

Blocage

18₁

18

19

18₂

Horloge

17

Vidéo codée

10

11

LIGNE A RETARD

DTC

15

13

13₂

13₃

Vidéo décodée

12

13₁

14

40

16

# FIG_2

a) 21 22 23 20 B₁ B₁

b) 21₁ B 2B₁ 23₁

c)

d) 21₂ 22₂ 23₂

e) 31 30

f) 21₃ 22₃ 23₃